# EUROPEAN PATENT SPECIFICATION

(11) **EP 2 699 612 B1**
(45) Date of publication and mention of the grant of the patent: **13.07.2016**
(21) Application number: 12715974.7
(22) Date of filing: 17.04.2012
(51) Int. Cl.: C08G 18/00, C08G 18/08, C08G 18/28, C08G 18/70

(54) **WATER-EMULSIFIABLE POLYISOCYANATE COMPOSITION COMPRISING A FRAGRANT WITH AT LEAST ONE HYDROXYL AND/OR ALDEHYDE GROUP**
IN WASSER EMULGIERBARE POLYISOCYANATZUSAMMENSETZUNG MIT EINEM DUFTSTOFF MIT MINDESTENS EINER HYDROXYL- UND/ODER ALDEHYDGRUPPE
COMPOSITION DE POLYISOCYANATE ÉMULSIONNABLE DANS L'EAU COMPORTANT UNE FRAGRANCE AVEC AU MOINS UN GROUPE HYDROXYLE ET/OU ALDÉHYDE

(30) Priority: 19.04.2011 EP 11162937
(43) Date of publication of application: 26.02.2014
(73) Proprietor: Covestro Deutschland AG, 51373 Leverkusen (DE)
(72) Inventor: REYER, Robert, 40764 Langenfeld (DE); MELCHIORS, Martin, 42799 Leichlingen (DE); ALMATO GUITERAS, Maria, E-08031 Barcelona (ES); TEJADA , Eva, E-08100 Mollet del Vallés (Barcelona) (ES)
(74) Representative: Levpat
(86) International application number: PCT/EP2012/057020
(87) International publication number: WO 2012/143359

(56) References cited:
- US-A- 5 583 176
- US-A1- 2004 034 162

## Description

The present invention relates to an aqueous composition comprising a water-emulsifiable polyisocyanate (A) and a specific fragrant (D1), the water-emulsifiable polyisocyanate (A) being a reaction product of a polyisocyanate (B) with a compound (C) which contains at least one sulfonic acid group or its anion, and at least one isocyanate-reactive group. Further aspects of the invention are the use of a composition according to the invention as an adhesive, a coating or an impregnating material and a substrate coated with a composition according to the invention. Water-emulsifiable polyisocyanates have gained importance for various fields of use in recent years. They are currently used in particular as cross-linking components for high-quality water-dilutable two-component polyurethane paints (2C PU paints) or as an additive for aqueous dispersion adhesives, are used for cross-linking aqueous dispersion in textile finishing or formaldehyde-free textile printing inks and moreover are also suitable, for example, as auxiliary substances for wet-strength finishing of paper (cf. e.g. EP 0 959 087 A1 and literature cited herein).

US 5,583,176 discloses water-emulsifiable polyisocyanates, containing aliphatic, cycloaliphatic or aromatic polyisocyanates and reaction products of the abovementioned polyisocyanates with compounds which contain at least one group called a sulfo group, and at least one isocyanate-reactive group.

A specific example of modified polyisocyanates is given in US 2004/034162 A1 which discloses modified polyisocyanates obtainable by reaction of polyisocyanates with 2-(cyclohexylamino)-ethanesulfonic acid and/or 3-(cyclohexylamino)-propanesulfonic acid.

The water-emulsifiable polyisocyanates may sometimes have an unpleasant odor either as an inherent property or due to impurities or additional components. This may especially be the case when the water-emulsifiable polyisocyanates are supplied in the form of a solution with an organic co-solvent.

The present invention has the object of providing water-borne polyisocyanate compositions with are more acceptable to a professional user or a private customer due to an improved smell.

According to the present invention this object is achieved by an aqueous composition comprising a water-emulsifiable polyisocyanate (A), the water-emulsifiable polyisocyanate (A) being a reaction product of a polyisocyanate (B) with a compound (C) which contains at least one sulfonic acid group or its anion, and at least one isocyanate-reactive group, wherein the composition further comprises a fragrant (D1) which is, under the proviso of having at least one hydroxyl and/or aldehyde group, selected from the group comprising unsaturated or saturated, acyclic, monocyclic or bicyclic monoterpenes and sesquiterpenes, which may in each case be substituted with 1, 2, 3 or 4 identical or different substituents selected from the group comprising an -OH, oxo (=O or -O-), - O-C₁₋₅-alkyl, -O-phenyl, -C(-O)-OH, -C(-O)-O-C₁₋₅-alkyl, -C(-O)-O-phenyl, -O-C(-O)-C₁₋₅-alkyl,-O-C(-O)-phenyl group and -CN, the alkyl and/or phenyl residue possibly being substituted with 1, 2 or 3 substituents selected from the group comprising OH, oxo (=O) and -IC₁₋₅-alkyl; phenyl or naphthyl compounds, which may in each case be substituted with 1, 2, 3, 4 or 5 identical or different substituents selected from the group comprising a -C(-O)-H, -C(-O)-C₁₋₅-alkyl, -C(-O)-phenyl, -OH, -C₁₋₅alkyl, -C₂₋₅alkenyl, -O-C₁₋₅-alkyl, -O-C(-O)-C₁₋₅-alkyl, -O-C(-O)-C₂₋₆-alkylene,-O-C(-O)-phenyl, -O-C(-O)-OH, phenyl, -C(-O)-OH, -C(-O)-O-C₁₋₅-alkyl, -C(-O)-O-C₂₋₈-alkenyl,-C(-O)-O-phenyl, -C(-O)-O-C₃₋₈-cycloalkyl, -CH-C(-C₁₋₅-alkyl)(C(-O)-H), -NO₂ and -NH₂ group, the substituents in each case possibly being attached by way of a linear or branched C₁₋₇ alkylene or C₂₋₅ alkenylene bridge, which may in each case be substituted with 1, 2 or 3 identical or different substituents selected from the group comprising F, Cl, and Br; phenyl or naphthyl compounds, which may be condensed with 1 or 2 unsaturated or saturated 5- to 7-membered aliphatic rings, wherein the rings may in each case comprise 1, 2 or 3 heteroatom(s) selected from the group consisting of oxygen, nitrogen and sulfur as ring member(s) and be substituted with 1, 2, 3, 4 or 5 identical or different substituents selected from the group comprising a -C₁₋₅ alkyl, -OH and -O-C₁₋₅-alkyl group; and unsaturated or saturated, unsubstituted, linear, branched or cyclic esters, alcohols and aldehydes, which comprise 5 to 20, preferably 5 to 16, carbon atoms and optionally 1, 2 or 3 heteroatom(s) selected from the group consisting of oxygen and sulfur as chain link(s) or ring member(s).

Since the fragrances useful in this respect contain OH or aldehyde groups it has been thought that they could not be introduced into water-emulsifiable polyisocyanate compositions without adversely influencing the performance or the storage stability of the polyisocyanate. It has been surprisingly found that this is not the case.

Therefore better smelling (or less off-putting smelling) storage-stable cross-linkers are provided. An additional advantage is that the OH- or aldehyde-functional fragrances (D1) may also be incorporated into a polyurethane matrix under appropriate conditions. This is advantageous if, for example, it is not desirable for a final coating or an adhesive to have an odor of its own.

Examples for polyisocyanates (B) as a starting material for forming water-emulsifiable polyisocyanates (A) include aliphatic diisocyanates such as tetramethylene diisocyanate, hexamethylene diisocyanate (1,6-diisocyanatohexane), octamethylene diisocyanate, decamethylene diisocyanate, dodecamethylene diisocyanate, tetradecamethylene diisocyanate, trimethylhexane diisocyanate or tetramethylhexane diisocyanate, cycloaliphatic diisocyanates such as 1,4-, 1,3- or 1,2-diisocyanatocyclohexane, 4,4'-di(isocyanatocyclohexyl)methane, 1-isocyanato-3,3,5-trimethyl-5-isocyanatomethylcyclohexane (isophorone diisocyanate) or 2,4-, or 2,6-diisocyanato-1-methylcyclohexane and also aromatic diisocyanates such as 2,4- or 2,6-tolylene diisocyanate, tetramethylxylylene diisocyanate, p-xylylene diisocyanate, 2,4'- or 4,4'-diisocyanatodiphenylmethane, 1,3- or 1,4-phenylene diisocyanate, 1-chloro-2,4-phenylene diisocyanate, 1,5-naphthylene diisocyanate, diphenylene 4,4'-diisocyanate, 4,4'-diisocyanato-3,3'-dimethyldiphenyl, 3-methyldiphenylmethane 4,4'-diisocyanate or diphenyl ether 4,4'-diisocyanate. Mixtures of the diisocyanates mentioned can also be present. Hexamethylene diisocyanate and isophorone diisocyanate are preferred.

Suitable customary more highly functionalized polyisocyanates are, for example, triisocyanates such as 2,4,6-triisocyanatotoluene or 2,4,4'-triisocyanatodiphenyl ether or the mixtures of di-, tri-and higher polyisocyanates which are obtained by phosgenation of appropriate aniline/formaldehyde condensates and represent polyphenyl polyisocyanates having methylene bridges.

Also suitable are customary aliphatic more highly functionalized polyisocyanates of the following groups:
(a) Isocyanurate-containing polyisocyanates of aliphatic and/or cycloaliphatic diisocyanates. Particularly preferred in this context are the corresponding isocyanato isocyanurates based on hexamethylene diisocyanate and isophorone diisocyanate. The isocyanurates are, in particular, simple trisisocyanatoalkyl or tris-isocyanatocycloalkyl isocyanurates which are cyclic trimers of the diisocyanates, or mixtures with their higher homologs containing more than one isocyanurate ring. The isocyanato iscyanurates in general have an NCO content of from 10 to 30% by weight, in particular 15 to 25% by weight, and a mean NCO functionality of from 2,6 to 4,5.
(b) Uretdione diisocyanates having aliphatically and/or cycloaliphatically bonded isocyanate groups, preferably derived from hexamethylene diisocyanate or isophorone diisocyanate. Uretdione diisocyanates are cyclic dimerization products of diisocyanates.
(c) Biuret-containing polyisocyanates having aliphatically bonded isocyanate groups, in particular tris(6-isocyanatohexyl)biuret or its mixtures with its higher homologs. These biuret-containing polyisocyanates in general have an NCO content of from 10 to 30 % by weight, in particular from 18 to 25% by weight, and a mean NCO functionality of from 3 to 4,5.
(d) Urethane- and/or allophanate-containing polyisocyanates having aliphatically or cycloaliphatically bonded isocyanate groups, as can be obtained, for example, by reaction of excess amounts of hexamethylene diisocyanate or of isophorone diisocyanate with simple polyhydric alcohols such as trimethylolpropane, glycerol, 1,2-dihydroxypropane or mixtures thereof. These urethane- and/or allophanate-containing polyisocyanates in general have an NCO content of from 12 to 20% by weight and a mean NCO functionality of from 2,5 to 3.
(e) Oxadiazinetrione-containing polyisocyanates, preferably derived from hexamethylene diisocyanate or isophorone diisocyanate. Such oxadiazinetrione-containing polyisocyanates can be prepared from diisocyanate and carbon dioxide.
(f) Uretonimine-modified polyisocyanates.

Aliphatic and cycloaliphatic polyisocyanates are particularly preferred. Hexamethylene diisocyanate and isophorone diisocyanate are very particularly preferred, in particular their isocyanurates and biurets.

For the preparation of the water-emulsifiable polyisocyanates (A), the above named polyisocyanates are reacted with compounds which contain at least one, preferably one, sulfonic acid group or its anion and at least one, preferably one, isocyanate-reactive group, e.g. a hydroxyl, mercapto or primary or secondary amino group (in short an NH group).

Such compounds are, for example, hydroxy- or aminosulfonic acids or alternatively hemiesters of sulfuric acid with OH or NH groups. Compounds containing a sulfonic acid group are preferred.

Hydroxysulfonic acids are also preferred. Hydroxysulfonic acids having an aliphatically bonded OH group are very particularly preferred. Examples of these are hydroxysulfonic acids and the tertiary ammonium and alkali metal salts derived therefrom having the following structures: 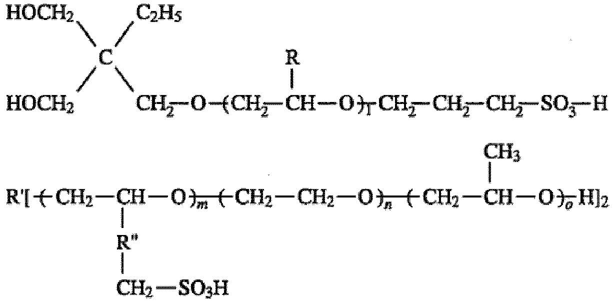 where R=H or CH₃; R' and R" are divalent organic radicals, preferably having 1 to 20 C atoms; 1=5 to 50; m=1 to 5; n=0 to 50 and o=0 to 50 (obtainable from Goldschmidt AG).

Furthermore, compounds which can be used are ammonium sulfobetaines, as can be obtained by quaternization of tertiary amines containing hydroxyl groups with propane sulfone.

Adducts of bisulfites to olefinically unsaturated alcohols can also be used, as are described, for example, in DE-A-24 17 664, DE-A-24 37 218 and DE-A-24 46 440 and the references mentioned therein.

Specifically, 2-hydroxyethanesulfonic acid and 2-hydroxypropanesulfonic acid can also be used.

For the preparation of the water-dispersible polyisocyanates the polyisocyanates described above are reacted with the compounds which contain both sulfonic acid groups and isocyanate-reactive groups.

The sulfonic acid-containing compounds can be employed either in their acid or their salt form. The higher molecular weight sulfo-containing compounds can be used in the form of their alkali metal salts, as the large organic radical has a sufficient solubility in the starting polyisocyanate. The alkali metal salts of the low molecular weight sulfo-containing compounds are in general not soluble in the reaction medium. In this case, it is advantageous to prepare the free acids according to generally known methods and either to employ them as such or in the form of their salts with tertiary amines. In the case where the free acid was used, the neutralization can either be carried out later by addition of anhydrous bases, e.g. tertiary amines, to the water-emulsifiable polyisocyanate or by emulsification of the water-emulsifiable polyisocyanate in base-containing water.

It can be advantageous to use solvents which are inert to NCO in the synthesis, such as hydrocarbons, ketones, esters, amides or suitable lactams. The reaction is preferably carried out at from 20 °C to 150 °C; if appropriate with additional use of customary catalysts, e.g. dibutyltin dilaurate or diazabicyclooctane.

Fragrances (D1) are, under the proviso of having at least one hydroxyl and/or aldehyde group, compounds selected from the group comprising unsaturated or saturated, acyclic, monocyclic or bicyclic monoterpenes and sesquiterpenes, which may in each case be substituted with 1, 2, 3 or 4 identical or different substituents selected from the group comprising an -OH, oxo (=O or -O-), -O-C₁₋₅-alkyl, -O-phenyl, -C(-O)-OH, -C(-O)-O-C₁₋₅-alkyl, -C(-O)-O-phenyl, -O-C(-O)-C₁₋₅-alkyl, -O-C(-O)-phenyl group and -CN, the alkyl and/or phenyl residue possibly being substituted with 1, 2 or 3 substituents selected from the group comprising OH, oxo (=O) and -O-C₁₋₅-alkyl; phenyl or naphthyl compounds, which may in each case be substituted with 1, 2, 3, 4 or 5 identical or different substituents selected from the group comprising a -C(-O)-H, -C(-O)-C₁₋₅-alkyl, -C(-O)-phenyl, -OH, -C₁₋₅alkyl, -C₂₋₅alkenyl, -O-C₁₋₅-alkyl, -O-C(-O)-C₁₋₅-alkyl, -O-C(-O)-C₂₋₆-alkylene,-O-C(-O)-phenyl, -O-C(-O)-OH, phenyl, -C(-O)-OH, -C(-O)-O-C₁₋₅-alkyl, -C(-O)-O-C₂₋₈-alkenyl,-C(-O)-O-phenyl, -C(-O)-O-C₃₋₈-cycloalkyl, -CH-C(-C₁₋₅-alkyl)(C(-O)-H), -NO₂ and -NH₂ group, the substituents in each case possibly being attached by way of a linear or branched C₁₋₇ alkylene or C₂₋₅ alkenylene bridge, which may in each case be substituted with 1, 2 or 3 identical or different substituents selected from the group comprising F, Cl, and Br; phenyl or naphthyl compounds, which may be condensed with 1 or 2 unsaturated or saturated 5- to 7-membered aliphatic rings, wherein the rings may in each case comprise 1, 2 or 3 heteroatom(s) selected from the group consisting of oxygen, nitrogen and sulfur as ring member(s) and be substituted with 1, 2, 3, 4 or 5 identical or different substituents selected from the group comprising a -C₁₋₅ alkyl, -OH and -O-C₁₋₅-alkyl group; and unsaturated or saturated, unsubstituted, linear, branched or cyclic esters, alcohols and aldehydes, which comprise 5 to 20, preferably 5 to 16, carbon atoms and optionally 1, 2 or 3 heteroatom(s) selected from the group consisting of oxygen and sulfur as chain link(s) or ring member(s).

The aqueous composition contains as fragrance (D1) at least one natural or nature-identical compound selected from the group consisting of benzaldehyde, benzyl alcohol, neral, citronellal, citronellol, farnesol, decanal, dihydrolinalool, dihydromyrcenol, dimethylphenylcarbinol, eucalyptol, geraniol, hydroxycitronellal, linalool, linalool oxide, methylnonylacetaldehyde, myrcenol, nerol, phenylethyl alcohol, alpha-terpinol, beta-terpinol, alpha-amylcinnamaldehyde, amyl salicylate, cinnamyl alcohol, cinnamyl aldehyde, ethylvanillin, eugenol, iso-eugenol, piperonal, lilial, nerolidol, patchouli alcohol, phenylhexanol, triethyl citrate, vanillin, dimethoxybenzaldehyde, hexylcinnamaldehyde and lyral® (3-and 4-(4-hydroxy-4-methylpentyl) cyclohexene-1-carboxaldehyde). More preferably the aqueous composition contains as fragrance (D1) at least one natural or nature-identical compound selected from the group consisting of benzaldehyde, benzyl alcohol, citronellol, farnesol, geraniol, alpha-terpinol, beta-terpinol, alpha-amylcinnamaldehyde, cinnamyl aldehyde, eugenol and iso-eugenol.

Further fragrances which may be present in the composition according to the invention are disclosed in David J. Rowe, Chemistry and Technology of Flavors and Fragrances, Taylor & Francis Group, 2004; Michael Edwards, Fragrances of the World 2005, Crescent House Pub., 2004 and David Pybus, The Chemistry of Fragrances, Royal Society of Chemistry, 1999. The corresponding disclosures are hereby deemed to be part of the present disclosure.

At least one naturally occurring mixture of fragrances may also be used as a fragrance (D1) for the composition according to the invention. In particular, at least one suitable fragrance or aroma additive mixture is selected from the group comprising rosemary oil, sandalwood oil, violet oil, lemon grass oil, lavender flower oil, eucalyptus oil, peppermint oil, chamomile oil, clove leaf oil, cinnamon oil, thyme oil, tea tree oil, cajeput oil, niaouli oil, manuka oil, citrus oil, mountain pine oil, jasmine oil, geranium oil, caraway oil, pine-needle oil, bergamot oil, terpentine oil, linalol oil, blood orange oil, cypress oil, silver fir oil, fennel oil, grapefruit oil, ginger oil, pine-needle oil, lavandin oil, lemon-grass oil, lime oil, mandarin oil, melissa oil, myrrh oil, patchouli oil, rosewood oil and thuja oil.

The aqueous mixture may further comprise fragrances (D2) selected from the group comprising unsaturated or saturated, acyclic, monocyclic or bicyclic monoterpenes and sesquiterpenes, which may in each case be substituted with 1, 2, 3 or 4 identical or different substituents selected from the group comprising an -OH, oxo (=O or -O-), -O-C₁₋₅-alkyl, -O-phenyl, -C(-O)-OH, -C(-O)-O-C₁₋₅-alkyl, -C(-O)-O-phenyl, -O-C(-O)-C₁₋₅-alkyl, -O-C(-O)-phenyl group and -CN, the alkyl and/or phenyl residue possibly being substituted with 1, 2 or 3 substituents selected from the group comprising OH, oxo (=O) and -O-C₁₋₅-alkyl. By way of example, the composition according to the invention may contain as fragrance (D2) limonene, myrcene, pinene, terpinene, selinene, camphene and cymene.

It is possible that the composition further comprises an aliphatic, cycloaliphatic or aromatic polyisocyanate (E) which is different from the water-emulsifiable polyisocyanate (A). This polyisocyanate may be identical to or different than the polyisocyanate (B) used for the formation of the water-emulsifiable polyisocyanate (A). In such mixtures the polyisocyanates (A) take over the function of an emulsifier for the subsequently admixed content of non-hydrophilic polyisocyanates (E).

It is also possible that the composition according to the invention also comprises organic co-solvents. Examples for these co-solvents include esters, ethers and ketones. Then the added fragrant also has a safety benefit because it signals to the user of the composition that an organic and thus potentially flammable solvent is present.

The present invention will be further described in connection with various embodiments which may be combined freely unless the context clearly indicates otherwise.

In one embodiment of the composition according to the invention the composition further comprises propylene glycol-n-butyl ether and/or 3-methoxy-1-butyl acetate as an organic co-solvent.

In another embodiment of the composition according to the invention the fragrant (D1) is preferably present in an amount of 0,1 weight-% to ≤ 3 weight-%, more preferably in an amount of 0,2 weight-% to ≤ 3 weight-%, even more in an amount of 0,3 weight-% to ≤ 2,5 weight-%, based on the total amount of water-emulsifiable polyisocyanate (A).

In another embodiment of the composition according to the invention the combined amount of sulfonic acid groups and anions of sulfonic acid groups is ≥ 0,03 mol/kg to ≤ 3 mol/kg of water-emulsifiable polyisocyanate (A).

As already outlined above, in another embodiment of the composition according to the invention the compound (C) containing at least one sulfonic acid group or its anion and at least one isocyanate-reactive group is a hydroxysulfonic acid, an aminosulfonic acid or a hemiester of sulfuric acid with a hydroxyl group or a primary or secondary amino group.

Preferably the compound (C) containing at least one sulfonic acid group or its anion and at least one isocyanate-reactive group is 2-(cyclohexylamino)-ethanesulfonic acid and/or 3-(cyclohexylamino)-propanesulfonic acid and/or anions or zwitterions of the aforementioned sulfonic acids. 2-(cyclohexylamino)-ethanesulfonic acid (CHES), 3-(cyclohexylamino)-propanesulfonic acid (CAPS) or any desired mixtures of these two aminosulfonic acids are suitable. These compounds are known, they are in crystalline form as zwitterionic substances, and have melting points above 300 °C. The preparation of CHES and CAPS is described, for example, in Bull. Soc. Chim. France 1985, 463 and in Z. Chem. 7, 151 (1967). The preparation of CAPS-modified polyisocyanates is mentioned in great detail in US 2004/034162 A1.

In another embodiment of the composition according to the invention the water-emulsifiable polyisocyanate (A) further comprises alkylene oxide units. The dispersability of polyisocyanates already modified with, for example, ethylene oxide polyether units is considerably improved by the modification with 2-(cyclohexylamino)-ethanesulfonic acid and/or 3-(cyclohexylamino)-propanesulfonic acid, so that the use of external emulsifiers or the use of high shear forces can be dispensed with, which considerably simplifies the preparation of the ready-to-use formulations. For this, a polyisocyanate is reacted with 2-(cyclohexylamino)-ethanesulfonic acid and/or 3-(cyclohexylamino)-propanesulfonic acid in the presence of polyalkylene oxide polyether alcohols containing ethylene oxide units and/or the polyisocyanates employed optionally already contain such units.

Preferably the alkylene oxide units are ethylene oxide units. For example, the content of ethylene oxide groups bonded within polyether chains (calculated as C₂H₂O; molecular weight = 44 g/mol) may be > 0 weight-% to ≥ 19,5 weight-% with respect to the modified polyisocyanate (A). polyether chains may contain a statistical average of 5 to 55 ethylene oxide units.

The present invention is further directed to the use of a composition according to the invention as an adhesive, a coating or an impregnating material.

Another aspect of the present invention is a substrate coated with a composition according to the invention.

The polyisocyanate compositions according to the invention are particularly preferably used as cross-linking agents for paint binders or paint binder components which are dissolved or dispersed in water and have groups which are reactive towards isocyanate groups, in particular alcoholic hydroxyl groups, in the production of coatings using aqueous coating compositions based on such binders or binder components. The combining of the cross-linking agent, optionally in emulsified form, with the binders or binder components can be carried out here by simple stirring before processing of the coating compositions by any desired methods, using mechanical aids known to the expert or also using two-component spray guns.

In this connection, paint binders or paint binder components which may be mentioned by way of example are: polyacrylates which are dissolved or dispersed in water and contain hydroxyl groups, in particular those of the molecular weight range of 1000 to 10000 g/mol, which, with organic polyisocyanates as cross-linking agents, are valuable two-component binders, or optionally urethane-modified polyester resins containing hydroxyl groups, of the type known from polyester and alkyd resin chemistry, which are dispersed in water. All binders which are dissolved or dispersed in water and contain groups which are reactive towards isocyanates are in principle suitable as reaction partners for the polyisocyanate mixtures according to the invention. These also include, for example, polyurethanes or polyureas which are dispersed in water and can be crosslinked with polyisocyanates on the basis of the active hydrogen atoms present in the urethane or urea groups.

The compositions according to the invention are in general used as cross-linking components for aqueous paint binders in those amounts which correspond to an equivalent ratio of NCO groups to groups which are reactive towards NCO groups, in particular alcoholic hydroxyl groups, of 0,5:1 to 2:1.

The polyisocyanate compositions according to the invention can also optionally be admixed in minor amounts to non-functional aqueous paint binders to achieve quite specific properties, for example as an additive to improve adhesion.

The polyisocyanates in the composition according to the invention can of course also be employed in a form blocked with blocking agents known per se from polyurethane chemistry, in combination with the abovementioned aqueous paint binders or paint binder components in the sense of aqueous one-component PU stoving systems. Suitable blocking agents are, for example, malonic acid diethyl ester, acetoacetic ester, acetone oxime, butanone oxime, epsilon-caprolactam, 3,5-dimethylpyrazole, 1,2,4-triazole, dimethyl-1,2,4-triazole, imidazole or any desired mixtures of these blocking agents.

Possible substrates for the aqueous coatings formulated with the aid of the polyisocyanate composition according to the invention include metal, wood, glass, stone, ceramic materials, concrete, rigid and flexible plastics, textiles, leather and paper, which can optionally also be provided with conventional primers before the coating.

The aqueous coating compositions which are formulated with the polyisocyanate compositions according to the invention and to which the conventional auxiliary substances and additives in the paint sector, such as e.g. flow auxiliaries, colored pigments, fillers, matting agents or emulsifiers, can optionally be added in general already have good paint properties on drying at room temperature.

However, they can of course also be dried under forced conditions at elevated temperature or by stoving at temperatures up to 260 °C.

Because of their emulsifiability in water, which allows a homogenous, particularly finely divided distribution in aqueous paint binders, the use of the polyisocyanates as cross-linking components for aqueous polyurethane paints leads to coatings with outstanding optical properties, in particular high surface gloss, flow and high transparency.

In addition to the preferred use as cross-linking components for aqueous 2C PU paints, the polyisocyanates according to the invention are outstandingly suitable as cross-linking agents for aqueous dispersion adhesives, leather and textile coatings or textile printing pastes, as AOX-free papermaking auxiliaries or also as additives for mineral building materials, for example concrete or mortar compositions.

### Examples:

The present invention will now be described with reference to the following non-binding examples.

### Glossary:

- Dispersion 1:: Aqueous, hydroxy-functional secondary polyacrylate dispersion, ca. 41 weight-% solids in dispersing agent water/Dowanol® PnB (propylene glycol-n-butyl ether) having a ratio of ca. 54/3,4.
- Isocyanate 1:: Hydrophilic aliphatic polyisocyanate based on hexamethylene diisocyanate with an NCO content of ca. 20,7% to 21,7% and a monomeric isocyanate content of < 0,5%. Used as a 70% (by weight) formulation in MPA (1-methoxy-2-propanol) or in Butoxyl® (3-methoxy-1-butyl acetate) as specified in the examples.
- Fragrant 1:: Masquodor® CS 669120 containing amyl cinnamic aldehyde, citronellol, benzaldehyde, geraniol and terpineol
- Fragrant 2:: Masquodor® CIT 669220 containing terpineol, myrcene, pinene and farnesol
- Fragrant 3:: Plastodor® CNF 661398 containing benzyl alcohol, cinnamic aldehyde, limonene and eugenol

### Clear formulations:

Clear coating formulations were prepared with 61,7 parts by weight of dispersion 1, 1,6 parts by weight of a non-ionic defoaming wetting agent, 0,1 parts by weight of a flow and leveling additive, 20 parts by weight of water, 0,4 parts by weight of a rheology modifier and 19 parts by weight of isocyanate 1 in MPA or Butoxyl®, respectively. Depending on the example, to the isocyanate 1 were also added 0,2 g of fragrances 1, 2 or 3. The NCO/OH ration of the formulations (discounting fragrances) was 1,5, the solids content 40 weight-% and the OH group content 3%.

### Testing conditions:

12 to 15 grams of each formulation were poured into a plastic container and immediately covered. After one and two hours the odor was evaluated: an experienced technician smelled the samples and graded the discernable odor of the organic solvent (MPA or Butoxyl®) on a scale of 0 to 5. A score of 0 means that the solvent odor has not been masked at all and a score of 5 means that the solvent odor has been totally masked. It has been found to be advisable to smell coffee between individual evaluations.

Furthermore, the formulations were coated on plexiglass panels with a wet coating thickness of 200 microns and aged at room temperature. Herein fresh preparations of the isocyanate 1 with the respective fragrances and preparations which had been aged for one month at room temperature were used in order to assess any influence of the fragrances on storage stability of the isocyanate. The appearance of the coating film was found to be satisfactory in all tests.

Haze-gloss was determined according to DIN 67530.

### Results:

| | Odor grade | Haze Gloss 20°/60° | Haze Gloss 20°/60° (aged Isocyanate 1) |
|---|---|---|---|
| Isocyanate 1 (70% in | 0 | 9 | - |
| MPA) | | 84/90 | - |
| Isocyanate 1 (70% in MPA | 1 | 9 | 9 |
| + Fragrant 1) | | 84/90 | 84/89 |
| Isocyanate 1 (70% in MPA | 2 | 9 | 8 |
| + Fragrant 2) | | 84/90 | 84/90 |
| Isocyanate 1 (70% in MPA | 1 | 9 | 7 |
| + Fragrant 3) | | 84/90 | 84/90 |
| Isocyanate 1 (70% in | 0 | 3 | - |
| Butoxyl®) | | 85/90 | - |
| Isocyanate 1 (70% in | 1 | 3 | 3 |
| Butoxyl® + Fragrant 1) | | 85/90 | 85/90 |
| Isocyanate 1 (70% in | 1 | 2 | 3 |
| Butoxyl® + Fragrant 2) | | 85/90 | 85/90 |
| Isocyanate 1 (70% in | 3 | 2 | 3 |
| Butoxyl® + Fragrant 3) | | 85/90 | 84/90 |

The tests show that the storage stability of the isocyanate is not affected. There are practically no changes in gloss and haze values between the aged and the freshly prepared mixtures of the isocyanate and the fragrances.

## Claims

1. An aqueous composition comprising a water-emulsifiable polyisocyanate (A),
the water-emulsifiable polyisocyanate (A) being a reaction product of a polyisocyanate (B) with a compound (C) which contains at least one sulfonic acid group or its anion, and at least one isocyanate-reactive group,
**characterized in that** the composition further comprises a fragrant (D1) which is, under the proviso of having at least one hydroxyl and/or aldehyde group, selected from the group comprising unsaturated or saturated, acyclic, monocyclic or bicyclic monoterpenes and sesquiterpenes, which may in each case be substituted with 1, 2, 3 or 4 identical or different substituents selected from the group comprising an -OH, oxo (=O or -O-), -O-C₁₋₅-alkyl, -O-phenyl, -C(-O)-OH, -C(-O)-O-C₁₋₅-alkyl, -C(-O)-O-phenyl, -O-C(-O)-C₁₋₅-alk-yl, -O-C(-O)-phenyl group and -CN, the alkyl and/or phenyl residue possibly being substituted with 1, 2 or 3 substituents selected from the group comprising OH, oxo (=O) and -O-C₁₋₅-alkyl; phenyl or naphthyl compounds, which may in each case be substituted with 1, 2, 3, 4 or 5 identical or different substituents selected from the group comprising a -C(-O)-H, -C(-O)-C₁₋₅-alkyl, -C(-O)-phenyl, -OH, -C₁₋₅alkyl, -C₂₋₅alkenyl, -O-C₁₋₅-alkyl, -O-C(-O)-C₁₋₅-alkyl, -O-C(-O)-C₂₋₆-alkylene, -O-C(-O)-phenyl, -O-C(-O)-OH, phenyl, -C(-O)-OH, -C(-O)-O-C₁₋₅-alkyl, -C(-O)-O-C₂₋₈-alkenyl, -C(-O)-O-phenyl, -C(-O)-O-C₃₋₈-cycloalkyl,-CH-C(-C₁₋₅-alkyl)(C(-O)-H), -NO₂ and -NH₂ group, the substituents in each case possibly being attached by way of a linear or branched C₁₋₇ alkylene or C₂₋₅ alkenylene bridge, which may in each case be substituted with 1, 2 or 3 identical or different substituents selected from the group comprising F, Cl, and Br; phenyl or naphthyl compounds, which may be condensed with 1 or 2 unsaturated or saturated 5- to 7-membered aliphatic rings, wherein the rings may in each case comprise 1, 2 or 3 heteroatom(s) selected from the group consisting of oxygen, nitrogen and sulfur as ring member(s) and be substituted with 1, 2, 3, 4 or 5 identical or different substituents selected from the group comprising a -C₁₋₅ alkyl, -OH and -O-C₁₋₅-alkyl group; and unsaturated or saturated, unsubstituted, linear, branched or cyclic esters, alcohols and aldehydes, which comprise 5 to 20, preferably 5 to 16, carbon atoms and optionally 1, 2 or 3 heteroatom(s) selected from the group consisting of oxygen and sulfur as chain link(s) or ring member(s).

2. The composition according to claim 1, further comprising propylene glycol-n-butyl ether and/or 3-methoxy-1-butyl acetate as an organic co-solvent.

3. The composition according to claim 1, wherein the fragrant (D1) is selected from the group consisting of benzaldehyde, benzyl alcohol, neral, citronellal, citronellol, farnesol, decanal, dihydrolinalool, dihydromyrcenol, dimethylphenylcarbinol, eucalyptol, geraniol, hydroxycitronellal, linalool, linalool oxide, methylnonylacetaldehyde, myrcenol, nerol, phenylethyl alcohol, alpha-terpinol, beta-terpinol, alpha-amylcinnamaldehyde, amyl salicylate, cinnamyl alcohol, cinnamyl aldehyde, ethylvanillin, eugenol, iso-eugenol, piperonal, lilial, nerolidol, patchouli alcohol, phenylhexanol, triethyl citrate, vanillin, dimethoxybenzaldehyde, hexylcinnamaldehyde and 3-and 4-(4-hydroxy-4-methyl-pentyl) cyclohexene-1-carboxaldehyde.

4. The composition according to claim 1, wherein the fragrant (D1) is present in an amount of ≥ 0,1 weight-% to ≤ 3 weight-%, based on the total amount of water-emulsifiable polyisocyanate (A).

5. The composition according to claim 1, wherein the combined amount of sulfonic acid groups and anions of sulfonic acid groups is ≥ 0,03 mol/kg to ≤ 3 mol/kg of water-emulsifiable polyisocyanate (A).

6. The composition according to claim 1, wherein the compound (C) containing at least one sulfonic acid group or its anion and at least one isocyanate-reactive group is a hydroxysulfonic acid, an aminosulfonic acid or a hemiester of sulfuric acid with a hydroxyl group or a primary or secondary amino group.

7. The composition according to claim 6, wherein the compound (C) containing at least one sulfonic acid group or its anion and at least one isocyanate-reactive group is 2-(cyclohexylamino)-ethanesulfonic acid and/or 3-(cyclohexylamino)-propanesulfonic acid and/or anions or zwitterions of the aforementioned sulfonic acids.

8. The composition according to claim 1, wherein the water-emulsifiable polyisocyanate (A) further comprises alkylene oxide units.

9. Use of a composition according to one or more of claims 1 to 8 as an adhesive, a coating or an impregnating material.

10. A substrate coated with a composition according to one or more of claims 1 to 8.

## Patentansprüche

1. Wässrige Zusammensetzung, umfassend ein wasseremulgierbares Polyisocyanat (A),
wobei es sich bei dem wasseremulgierbaren Polyisocyanat (A) um ein Umsetzungsprodukt eines Polyisocyanats (B) mit einer Verbindung (C), die mindestens eine Sulfonsäuregruppe oder deren Anion und mindestens eine gegenüber Isocyanat reaktive Gruppe enthält,
**dadurch gekennzeichnet, dass** die Zusammensetzung ferner einen Duftstoff (D1) umfasst, der unter der Maßgabe, dass er mindestens eine Hydroxyl- und/oder Aldehydgruppe aufweist, ausgewählt ist aus der Gruppe umfassend ungesättigte oder gesättigte, acyclische, monocyclische oder bicyclische Monoterpene und Sesquiterpene, die jeweils mit 1, 2, 3 oder 4 gleichen oder verschiedenen Substituenten ausgewählt aus der Gruppe umfassend -OH, Oxo (=O bzw. -O-), -O-C₁₋₅-Alkyl, -0-Phenyl, -C(-O)-OH, -C(-O)-O-C₁₋₅-Alkyl, -C(-O)-O-Phenyl, -O-C(-O)-C₁₋₅-Alkyl, -O-C(-O)-Phenyl und -CN substituiert sein können, wobei der Alkyl- und/oder Phenylrest mit 1, 2 oder 3 Substituenten ausgewählt aus der Gruppe umfassend OH, Oxo (=O) und -O-C₁₋₅-Alkyl substituiert sein kann; Phenyl- oder Naphthyl-Verbindungen, die jeweils mit 1, 2, 3, 4 oder 5 gleichen oder verschiedenen Substituenten ausgewählt aus der Gruppe umfassend -C(-O)-H, -C(-O)-C₁₋₅-Alkyl, -C(-O)-Phenyl, -OH, -C₁₋₅-Alkyl, -C₂₋₅-Alkenyl, -O-C₁₋₅-Alkyl, -O-C(-O)-C₁₋₅-Alkyl, -O-C(-O)-C₂₋₆-Alkylen, -O-C(-O)-Phenyl, -O-C(-O)-OH, Phenyl, -C(-O)-OH, -C(-O)-O-C₁₋₅-Alkyl, -C (-O)-O-C₂₋₈-Alkenyl, -C(-O)-O-Phenyl, -C(-O)-O-C₃₋₈-Cycloalkyl, -CH-C (C₁₋₅-Alkyl)(C(-O)-H), -NO₂ und -NH₂ substituiert sein können, wobei die Substituenten jeweils über eine lineare oder verzweigte C₁₋₇-Alkylen- oder C₂₋₅-Alkenylen-Brücke gebunden sein können, die jeweils mit 1, 2 oder 3 gleichen oder verschiedenen Substituenten ausgewählt aus der Gruppe umfassend F, Cl und Br substituiert sein kann; Phenyl- oder Naphthyl-Verbindungen, die mit 1 oder 2 ungesättigten oder gesättigten 5- bis 7-gliedrigen aliphatischen Ringen kondensiert sein können, wobei die Ringe jeweils 1, 2 oder 3 Heteroatom(e) ausgewählt aus der Gruppe bestehend aus Sauerstoff, Stickstoff und Schwefel als Ringglied(er) aufweisen können und mit 1, 2, 3, 4 oder 5 gleichen oder verschiedenen Substituenten ausgewählt aus der Gruppe umfassend -C₁₋₅-Alkyl, - OH und -O-C₁₋₅-Alkyl substituiert sein können; und ungesättigte oder gesättigte, unsubstituierte, lineare, verzweigte oder cyclische Ester, Alkohole und Aldehyde, die 5 bis 20, bevorzugt 5 bis 16, Kohlenstoffatome und gegebenenfalls 1, 2 oder 3 Heteroatom(e) ausgewählt aus der Gruppe bestehend aus Sauerstoff und Schwefel als Ketten- bzw. Ringglied(er)er aufweisen.

2. Zusammensetzung nach Anspruch 1, ferner umfassend Propylenglykol-n-butylether und/oder Essigsäure-3-methoxy-1-butylester als organisches Cosolvens.

3. Zusammensetzung nach Anspruch 1, wobei der Duftstoff (D1) ausgewählt ist aus der Gruppe bestehend aus Benzaldehyd, Benzylalkohol, Neral, Citronellal, Citronellol, Farnesol, Decanal, Dihydrolinalool, Dihydromyrcenol, Dimethylphenylcarbinol, Eukalyptol, Geraniol, Hydroxycitronellal, Linalool, Linalooloxid, Methylnonylacetaldehyd, Myrcenol, Nerol, Phenylethylalkohol, alpha-Terpinol, beta-Terpinol, alpha-Amylzimtaldehyd, Amylsalicylat, Zimtalkohol, Zimtaldehyd, Ethylvanillin, Eugenol, iso-Eugenol, Piperonal, Lilial, Nerolidol, Patschulialkohol, Phenylhexanol, Triethylcitrat, Vanillin, Dimethoxybenzaldehyd, Hexylzimtaldehyd und 3- und 4-(4-Hydroxy4-methylpentyl)cyclohexen-1-carboxaldehyd.

4. Zusammensetzung nach Anspruch 1, wobei der Duftstoff (D1) in einer Menge von ≥ 0,1 Gew.-% ≤ 3 Gew.-%, bezogen auf die Gesamtmenge von wasseremulgierbarem Polyisocyanat (A), vorliegt.

5. Zusammensetzung nach Anspruch 1, wobei die kombinierte Menge von Sulfonsäuregruppen und Anionen von Sulfonsäuregruppen ≥ 0,03 mol/kg bis ≤ 3 mol/kg wasseremulgierbares Polyisocyanat (A) beträgt.

6. Zusammensetzung nach Anspruch 1, wobei es sich bei der Verbindung (C), die mindestens eine Sulfonsäuregruppe oder deren Anion und mindestens eine gegenüber Isocyanat reaktive Gruppe enthält, um eine Hydroxysulfonsäure, eine Aminosulfonsäure oder einen Halbester von Schwefelsäure mit einer Hydroxylgruppe oder einer primären oder sekundären Aminogruppe handelt.

7. Zusammensetzung nach Anspruch 1, wobei es sich bei der Verbindung (C), die mindestens eine Sulfonsäuregruppe oder deren Anion und mindestens eine gegenüber Isocyanat reaktive Gruppe enthält, um 2-(Cyclohexylamino)ethansulfonsäure und/oder 3-(Cyclohexylamino)propansulfonsäure und/oder Anionen oder Zwitterionen der oben genannten Sulfonsäuren handelt.

8. Zusammensetzung nach Anspruch 1, wobei das wasseremulgierbare Polyisocyanat (A) ferner AlkylenoxidEinheiten umfasst.

9. Verwendung einer Zusammensetzung nach einem oder mehreren der Ansprüche 1 bis 8 als Klebstoff, Beschichtung oder Imprägnierungsmittel.

10. Substrat, das mit einer Zusammensetzung nach einem oder mehreren der Ansprüche 1 bis 8 beschichtet ist.

## Revendications

1. Composition aqueuse comprenant un polyisocyanate émulsionnable dans l'eau (A),
le polyisocyanate émulsionnable dans l'eau (A) étant un produit réactionnel d'un polyisocyanate (B) avec un composé (C) qui contient au moins un groupe acide sulfonique ou son anion et au moins un groupe réactif avec les groupes isocyanate,
**caractérisée en ce que** la composition comprend en outre un parfum (D1) qui est, à condition d'avoir au moins un groupe hydroxyle et/ou aldéhyde, choisi dans le groupe comprenant les monoterpènes et sesquiterpènes acycliques, monocycliques ou bicycliques, insaturés ou saturés, qui peuvent dans chaque cas être substitués par 1, 2, 3 ou 4 substituants identiques ou différents choisis dans le groupe constitué par un groupe -OH, oxo (=O ou -O-), -O-(alkyle en C₁₋₅), -0-phényle, -C(-O)-OH, -C(-O)-O-(alkyle en C₁₋₅), -C(-O)-O-phényle, -O-C(-O)-(alkyle en C₁₋₅), -O-C(-O)-phényle et -CN, le résidu alkyle et/ou phényle étant éventuellement substitué par 1, 2 ou 3 substituants choisis dans le groupe comprenant les substituants OH, oxo (=O) et -O-(alkyle en C₁₋₅) ; les composés phényliques ou naphtyliques, qui peuvent dans chaque cas être substitués par 1, 2, 3, 4 ou 5 substituants identiques ou différents choisis dans le groupe comprenant un groupe -C(-O)-H, -C(-O)-(alkyle en C₁₋₅), -C(-O)-phényle, -OH, -(alkyle en C₁₋₅), -(alcényle en C₂₋₅), -O-(alkyle en C₁₋₅), -O-C(-O)-(alkyle en C₁₋₅), -O-C(-O)-(alkylène en C₂₋₆), -O-C(-O)-phényle, -O-C(-O)-OH, phényle, -C(-O)-OH, -C(-O)-O-(alkyle en C₁₋₅), -C(-O)-O-(alcényle en C₂₋₈), -C(-O)-O-phényle, -C(-O)-O-(cycloalkyle en C₃₋₈), -CH-C(-alkyl en C₁₋₅)(C(-O)-H), -NO₂ et -NH₂, les substituants dans chaque cas étant éventuellement liés au moyen d'un pont alkylène en C₁₋₇ ou alcénylène en C₂₋₅ linéaire ou ramifié, qui peut dans chaque cas être substitué par 1, 2 ou 3 substituants identiques ou différents choisis dans le groupe comprenant les substituants F, Cl et Br ; les composés phényliques ou naphtyliques, qui peuvent être condensés avec 1 ou 2 cycles aliphatiques à 5 à 7 chaînons insaturés ou saturés, les cycles pouvant dans chaque cas comprendre 1, 2 ou 3 hétéroatomes choisis dans le groupe constitué par l'oxygène, l'azote et le soufre en tant que chaînons de cycle et être substitués par 1, 2, 3, 4 ou 5 substituants identiques ou différents choisis dans le groupe comprenant le groupe -(alkyle en C₁₋₅), -OH et -O-(alkyle en C₁₋₅) ; et les esters, alcools et aldéhydes linéaires, ramifiés ou cycliques, non substitués, insaturés ou saturés, qui comprennent 5 à 20, de préférence 5 à 16, atomes de carbone et facultativement 1, 2 ou 3 hétéroatomes choisis dans le groupe constitué par l'oxygène et le soufre en tant liaisons de chaîne ou chaînons de cycle.

2. Composition selon la revendication 1, comprenant en outre de l'éther de n-butyle et de propylèneglycol et/ou de l'acétate de 3-méthoxybut-1-yle en tant que cosolvant organique.

3. Composition selon la revendication 1, dans laquelle le parfum (D1) est choisi dans le groupe constitué par le benzaldéhyde, l'alcool benzylique, le néral, le citronellal, le citronellol, le farnesol, le décanal, le dihydrolinalol, le dihydromyrcénol, le diméthylphénylcarbinol, l'eucalyptol, le géraniol, l'hydroxycitronellal, le linalol, l'oxyde de linalol, le méthylnonylacétaldéhyde, le myrcénol, le nérol, l'alcool phényléthylique, l'alpha-terpinol, le bêta-terpinol, l'alpha-amylcinnamaldéhyde, le salicylate d'amyle, l'alcool cinnamylique, le cinnamaldéhyde, l'éthylvanilline, l'eugénol, l'isoeugénol, le pipéronal, le lilial, le nérolidol, l'alcool de patchouli, le phénylhexanol, le citrate de triéthyle, la vanilline, le diméthoxybenzaldéhyde, l'hexylcinnamaldéhyde et le 3-(4-hydroxy-4-méthylpentyl)cyclohexène-1-carbaldéhyde et 4-(4-hydroxy-4-méthylpentyl)cyclohexène-1-carbaldéhyde.

4. Composition selon la revendication 1, dans laquelle le parfum (D1) est présent en une quantité de ≥ 0,1 % en poids à ≤ 3 % en poids, sur la base de la quantité totale de polyisocyanate émulsionnable dans l'eau (A).

5. Composition selon la revendication 1, dans laquelle la quantité combinée de groupes acide sulfonique et d'anions de groupes acide sulfonique est ≥ 0,03 mol/kg à ≤ 3 mol/kg de polyisocyanate émulsionnable dans l'eau (A).

6. Composition selon la revendication 1, dans laquelle le composé (C) contenant au moins un groupe acide sulfonique ou son anion et au moins un groupe réactif avec les groupes isocyanate est un acide hydroxysulfonique, un acide aminosulfonique ou un hémiester de l'acide sulfurique portant un groupe hydroxyle ou un groupe amino primaire ou secondaire.

7. Composition selon la revendication 6, dans laquelle le composé (C) contenant au moins un groupe acide sulfonique ou son anion et au moins un groupe réactif avec les groupes isocyanate est l'acide 2-(cyclohexylamino)éthanesulfonique et/ou l'acide 3-(cyclohexylamino)propanesulfonique et/ou des anions ou zwitterions des acides sulfoniques susmentionnés.

8. Composition selon la revendication 1, dans laquelle le polyisocyanate émulsionnable dans l'eau (A) comprend en outre des motifs oxyde d'alkylène.

9. Utilisation d'une composition selon une ou plusieurs des revendications 1 à 8 comme adhésif, revêtement ou matière d'imprégnation.

10. Substrat revêtu d'une composition selon une ou plusieurs des revendications 1 à 8.
